(19) **Europäisches Patentamt**
**European Patent Office**
**Office européen des brevets**

(11) **EP 2 034 444 B1**

(12) **EUROPEAN PATENT SPECIFICATION**

(45) Date of publication and mention
of the grant of the patent:
**02.06.2010  Bulletin 2010/22**

(51) Int Cl.:
*G06T 15/20* (2006.01)     *G06T 3/00* (2006.01)

(21) Application number: **08163717.5**

(22) Date of filing: **04.09.2008**

(54) **Method for rotating images**

Verfahren zum Drehen von Bildern

Procédé de rotation d'images

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **05.09.2007  EP 07017373**

(43) Date of publication of application:
**11.03.2009  Bulletin 2009/11**

(73) Proprietor: **Vidiom SA
1292 Genève (CH)**

(72) Inventors:
• **Piotrowski, Michal
51-113 Wroclaw (PL)**
• **Hobgarski, Mateusz
58-506 Jelenia Gora (PL)**

(74) Representative: **Pawlowski, Adam
EuPatent.PL
Ul. Rentowna 20/26
93-310 Lodz (PL)**

(56) References cited:
**EP-A- 0 715 276     JP-A- 6 036 039
US-A- 5 307 450     US-A- 5 886 703**

• **"STi 5107: Low-cost interactive set top box
decoder" STMICROELECTRONICS, 1 December
2006 (2006-12-01), XP007906359 http:
//www.st.com**
• **HECKBERT P S ET AL: "INTERPOLATION FOR
POLYGON TEXTURE MAPPING AND SHADING"
STATE OF THE ART COMPUTER GRAPHICS:
VISUALIZATION ANDMODELLING, XX, XX, 1
January 1991 (1991-01-01), pages 101-111,
XP000614575**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The invention presented herein relates to graphics processing systems, and more particularly, to graphics processing systems performing rotation of graphical images around X or Y axis.

Rotations of images in three-dimensional space are well known in computer graphics. Nevertheless performance requirements are significant in such cases, therefore three-dimensional graphics is not available or available only to some extent in devices that have limited processing resources. Such devices are personal digital assistants, cellular telephones, receivers and decoders of digital television or the like.

A patent application JP06036039 presents a method for rotating images comprising dividing a geometric shape into intermediate figures and copying, with scaling, the corresponding part of the texture image in order to fit it into the intermediate figure. The split points are selected so as to reduce errors resulting from texture transformations. Such method, although producing high quality rotated images, involves relatively large amount of computations.

Hence, there exists a problem of how to decrease performance requirements without compromising users experience while looking at video or graphical data output by the aforementioned devices.

It is therefore an object of the invention presented herein to provide a graphics processing method, for rotating images, that has low computing speed requirements and that will not lead to noticeable quality decrease.

The object of the invention is a method of rotating a geometric shape having an assigned texture image, the method comprising the steps of obtaining a source geometric shape with an assigned texture, wherein the depth coordinate is constant for all pixels of the source geometric shape; receiving a request to rotate the source geometric shape around an axis of rotation being either the X-axis or the Y-axis of a two dimensional projection plane; defining a two dimensional outline of a rotated source geometric shape by performing its perspective projection onto the two dimensional plane; determining split points for the two dimensional outline, in places where pixel of either of the lines, non-parallel to the axis of rotation, of the two dimensional outline changes coordinates; splitting the two dimentional outline exclusively at the split points into intermediate rectangles, such that in case of a rotation around the Y axis, pixel's Y coordinate value changes by 1 or -1 counted from the Y coordinate value of the previous split point or the start of the line, non-parallel to the axis of rotation, of the two dimensional outline; and in case of a rotation around the X axis, pixel's X coordinate value changes by 1 or -1 counted from the X coordinate value of the previous split point or the start of the line, non-parallel to the axis of rotation, of the two dimensional outline. For each intermediate rectangle, finding a corresponding part of the texture image taking perspective correction into account; and copying, with scaling, the corresponding part of the texture image in order to fit it into the intermediate rectangle.

The lines, non-parallel to the axis of rotation, of the two dimensional outline can be calculated using Bresenham algorithm. A blitter may execute the copying and scaling tasks. The angle of rotation can be between 0 degrees and 45 degrees or 0 degrees and -45 degrees. At least one of the intermediate rectangles may have four equal sides. All depth coordinates of the Z axis, of the source geometric shape, may have equal value.

The object of the invention is also a computer program comprising program code means for performing all the steps of the above-described method when said program is run on a computer, as well as a computer readable medium storing computer-executable instructions performing all the steps of the above-described computer-implemented method when executed on a computer.

This and other objects of the invention presented herein are accomplished in accordance with the principles of the presented invention by providing an improved images rotation method. Further details and features of the system and method, its nature and various advantages will become more apparent from the accompanying drawing and the following detailed description of the preferred embodiments shown in a drawing, in which:

FIG. 1A to 1C show an example of rotation around the X axis;
FIG. 2A to 2C present an example of rotation around the Y axis;
FIG. 3A to 3C depict an example of mapping between a source geometric shape, having a texture mapped thereto, and a two-dimensional outline;
FIG. 4 is a block diagram illustrating steps of rotation method.

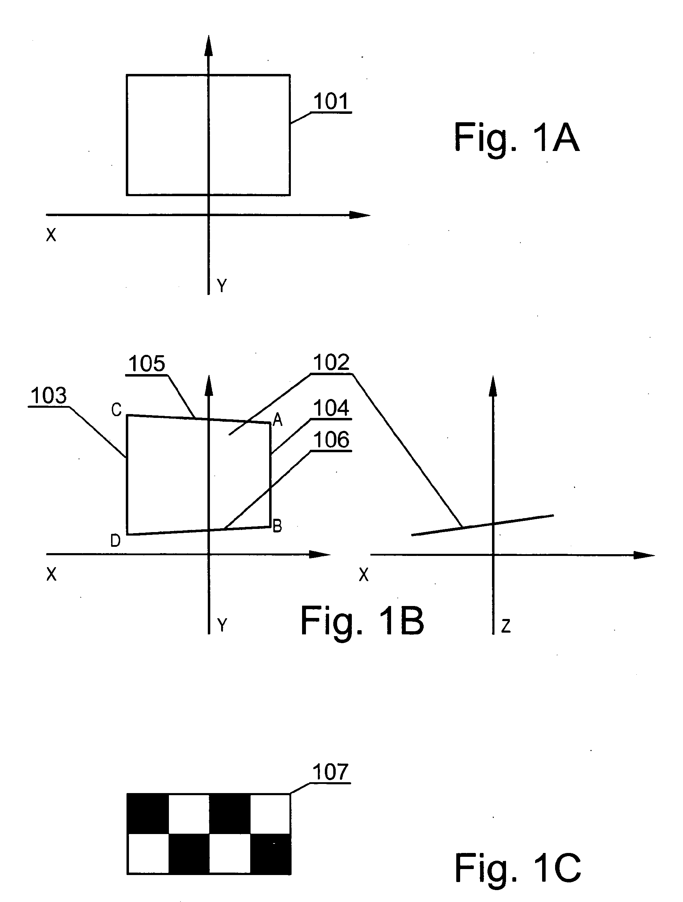

Fig. 1A presents a geometric shape having a form of a square 101 drawn on a two-dimensional X-Y plane. The four corners of the geometric shape have four pairs of corresponding X, Y coordinates. In such alignment the depth coordinate is constant for all pixels of the geometric shape 101.

When there is a need to rotate the geometric shape 101 around the Y axis, the depth coordinate becomes variable as presented in Fig. 1B. The geometric shape 102 is the geometric shape 101 rotated around the Y axis. Due to rotation, the geometric shape 102 is three-dimensional as presented with respect to the depth axis Z. As can bee seen, when such rotated geometric shape 102, or its outline, is projected onto a two dimensional X-Y plane its outline consists of two lines 103 and 104 that are parallel to the axis of rotation, which is Y in this example, and two angled lines 105, 106 positioned at an angle to the parallel lines 103, 104. The corners of the geometric shape 102 have been marked A- D respectively.

The geometric shape 101 has an assigned texture, which is shown in Fig. 1C. The texture 107 is to be mapped onto the geometric shape 101 and the geometric shape 102, which is 101 rotated in a three dimensional space.

An exemplary method for performing the projection onto a two dimensional X-Y plane can be a method defined by OpenGL Specification version 1.3, chapter 2.10 - "Coordinate Transformations".

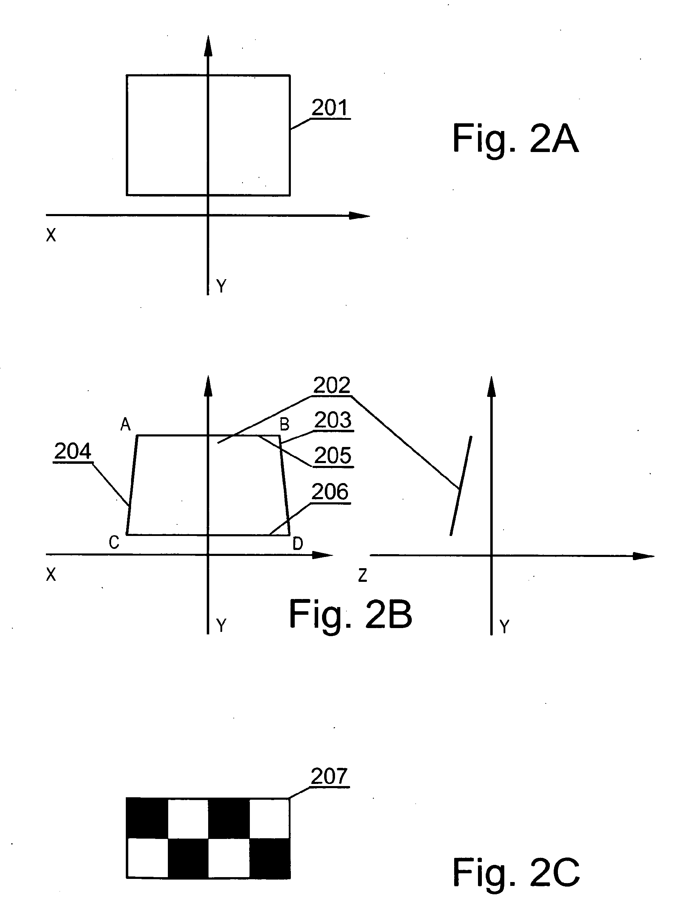

Fig. 2A presents a geometric shape having a form of a square 201 drawn on a two-dimensional X-Y plane. The four corners of the geometric shape have four pairs of corresponding X, Y coordinates. Similarly to Fig. 1A, in such alignment the depth coordinate is constant for all pixels of the image 201.

When there is a need to rotate the geometric shape 201 around the X axis, the depth coordinate becomes variable as presented in Fig. 2B with respect to the Z coordinate. The geometric shape 202 is the geometric shape 201 rotated around the X axis. As can be seen, when such rotated geometric shape 202, or its outline, is projected onto a two dimensional X-Y plane it consists of two lines 205 and 206 that are parallel to the axis of rotation, which is X in this example, and two angled lines 203, 204 positioned at an angle to the parallel lines 205, 206. The corners of the geometric shape 202 have been marked A- D respectively.

The geometric shape 201 has an assigned texture, which is shown in Fig. 2C. The texture 207 is to be mapped onto the geometric shape 201 and the shape 202, which is 201 rotated in a three dimensional space.

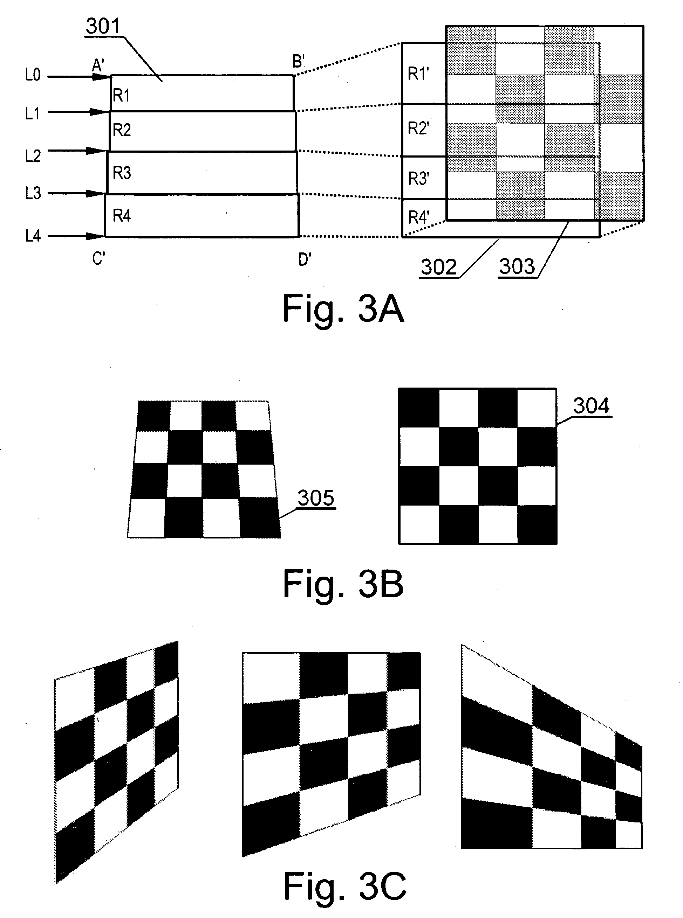

As shown in Fig. 3A the present method uses rectangles for image rendering. The four corners of the geometric shape 302 having an assigned texture 303, are now rotated 202, as shown in Fig. 2B, and are perspective projected onto the 2D screen plane 301, as shown in Fig. 3A. The outline of the destination image will be split into a relatively small number of intermediate rectangles. Nevertheless the small number of the intermediate rectangles shall not be treated as limiting.

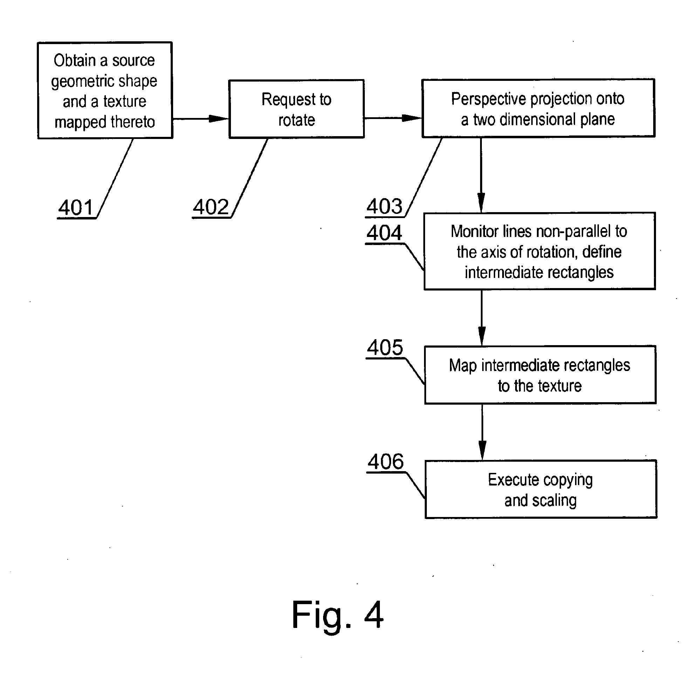

In this example four intermediate rectangles are defined R1-R4 that correspond to R1'-R4' rectangles on the geometric shape 302, which represents geometric shape 201 in this exemplary rotation around Y axis. 303 shows how texture 207 is mapped to the geometric shape 302. Details of the procedure used to extract and process the rectangles have been shown with reference to Fig. 4.

It is to be understood that at least one of the intermediate rectangles may have four equal sides.

After copying rectangles R1'-R4' with scaling so that they fit into intermediate rectangles R1-R4, the geometric shape with a mapped texture 304 of Fig. 3B will typically look as shown 305 in Fig. 3B. In this case more intermediate rectangles have been used.

One skilled in the art will easily recognize that as a result of perspective projection of a geometric shape, the method may obtain different shapes. The obtained shape depends on axis of rotation, angle of rotation and position of the geometric shape, relative to the observer, in the three-dimensional space. Examples of shapes obtained by rotation along the Y axis ,with different positions in the three-dimensional space, are depicted in Fig.3C.

The steps of the method according to the present invention have been shown with reference to the Fig. 4. The first step 401 is to obtain a source geometric shape and a texture mapped thereto. The next step 402 is to receive a request to rotate the source geometric shape of step 401.

The source geometric shape 101, 201 or 302 is defined in three-dimensional space by four points, each having corresponding X, Y and Z coordinate. When textures are used, each of the points A, B, C, D is also given a pair of coordinates (u, v) on the texture 107, 207 or 303. The texture is a rectangular image U pixels wide and V pixels high. The (u,v) coordinates define the portion of the texture that is to be mapped onto the rotated source geometric shape.

The next step 403, of the method, is to define a two dimensional outline of a rotated source geometric shape by performing a perspective projection onto a two dimensional plane. A perspective projection of the geometric shape from 3D space to 2D space is executed. Four corners of the rotated geometric shape are defined A', B', C', D' as shown in Fig. 3A.

In this step the system also calculates lines, non-parallel to the axis of rotation, between A' - C' and B' - D' as shown in the example in Fig. 3A, using for example the Bresenham algorithm. It is to be understood that other algorithms may be used for this task.

In step 404, lines, of the two-dimensional outline, non-parallel to the axis of rotation, are checked in terms of their angle and coordinates change. Division positions are set to create a set of intermediate rectangles on the target (rotated) geometric shape. The splitting points are set in places where either A'C' or B'D' line changes its X coordinate by a predetermined number of pixels, as shown in case of Fig. 3A. Those division lines are given labels from L0 to Ln, wherein the value of "n" determines the number of intermediate rectangles. Please note, that lines L0 and Ln are also called division lines for the sake of simplicity in describing the method.

The predetermined number of pixels may be kept low in order to achieve better quality. However the system may set division lines of the intermediate rectangles in places where monitored coordinate changes for example by several pixels. The intermediate rectangles will be larger and fewer copying and scaling operations will be required. Thus, at the cost of quality, performance is gained.

Next, in step 405 of the procedure, a mapping is made in order to find for each intermediate rectangle R1-Rn, of the two dimensional outline, a corresponding rectangle R1'-Rn' on the texture 107, 207 or 303 respectively. In the presented examples n is equal to 4. This may be achieved by a texture mapping with a perspective correction as described in details with reference to the following steps.

The first step is to compute values of 1/z and v/z for points A and C. These are specified as parameters: $A_{1/z}$, $C_{1/z}$, $A_{v/z}$, $C_{v/z}$ respectively. Next, for each Li division line (for i = 0 to n), to linearly interpolate the 1/z parameter (specified as $Li_{1/z}$) and v/z parameter (specified as $Li_{v/z}$) along the AC edge. $Li_{1/z}$ can be calculated based on linear interpolation:

$$Li_{1/z} / (C_{1/z} - A_{1/z}) == (Liy\text{-}A'y) / (C'y\text{-}A'y) => Li_{1/z} == ((Liy\text{-}A'y) / (C'y\text{-}A'y)) * (C_{1/z} - A_{1/z})$$

and $Li_{v/z}$ can be calculated similarly:

$$Li_{v/z} / (C_{v/z} - A_{v/z}) == (Liy\text{-}A'y) / (C'y\text{-}A'y) => Li_{v/z} == ((Liy\text{-}A'y) / (C'y\text{-}A'y)) * (C_{v/z} - A_{v/z})$$

where Liy, A'y, C'y are y coordinates of A', C', Li points. Subsequently these computations are performed in order to get V value:

$$Z = 1 / Li_{1/z}$$

$$Liv = Li_{v/z} * Z$$

Now for Ri' rectangle (for i = 1 to n) the source coordinates for blit operation (copying with scaling) are defined as coordinates on texture:

    top left corner:(Au, Li-1v)
    bottom right corner: (Bu, Liv)

where Au and Bu are "u" coordinates of A and B points. The target rectangle to blit to (to copy with scaling) is Ri' rectangle itself 406. A specific hardware module, called a blitter, may be used to do this processing. Typically all target rectangles require scaling, it may however happen that only copying will suffice for some of them. For example copying may be enough for the target rectangle closest to the axis of rotation.

Performance tests have shown that the method, according to the present invention, results in improved performance when angles of rotation between 0 degrees and 45 degrees are concerned. Improvement in performance is very significant in the range of 0 degrees to 15 degrees and significant in the range between 15 and 30 degrees. Between 30 and 45 degrees improvement is noticeable. Therefore the lower the angle of rotation the greater gain in performance improvement. Similarly angles in the range between -45 degrees and 0 degrees may be considered in case of counter clockwise rotation.

The method, according to the present invention, gives the best results with squares and rectangles but can be applied to images of other shapes, for example a trapezoid or a triangle.

The method described herein is particularly useful when a device, executing the rotation, is equipped with a hardware 2D accelerator capable of copying 2D surface with simultaneous scaling.

It can be easily recognised, by one skilled in the art, that the aforementioned method may be performed by one or more computer programs. Such computer programs are typically executed by utilizing the computing resources in a computing device such as aforementioned personal digital assistants, cellular telephones, receivers and decoders of digital television or the like. Applications are stored in non-volatile memory, for example flash memory or volatile memory, for example RAM and are executed by a processor. These memories are exemplary recording media for storing computer programs comprising computer-executable instructions performing all the steps of the computer-implemented method according the invention presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the invention. The presented preferred embodiments are exemplary only, and are not exhaustive of the scope of the invention presented herein. Accordingly, the scope of protection is not limited to the preferred embodiments described in the specification, but is only limited by the claims that follow.

**Claims**

1. A computer-inplemented method of rotating a geometric shape having an assigned texture image, the method comprising the steps of

   • obtaining a source geometric shape (101, 201, 302) with an assigned texture (303), wherein the depth coordinate is constant for all pixels of the source geometric shape (101, 201, 302);
   • receiving a request to rotate the source geometric shape (101, 201, 302) around an axis of rotation being either the X-axis or the Y-axis of a two dimensional projection plane;
   • defining a two dimensional outline of a rotated source geometric shape by performing its perspective projection onto the two dimensional plane;

   **characterized in that** the method further comprises the step of

   • determining split points for the two dimensional outline in places where pixel of either of the lines, non-parallel to the axis of rotation, of the two dimensional outline changes coordinates,
   • splitting the two dimensional outline exclusively at the split points into intermediate rectangles (R1-R4), such that:

      • in case of a rotation around the Y axis, pixel's Y coordinate value changes by 1 or -1 counted from the Y coordinate value of the previous split point or the start of the line, non-parallel to the axis of rotation, of the two dimensional outline; and
      • in case of a rotation around the X axis, pixel's X coordinate value changes by 1 or -1 counted from the X coordinate value of the previous split point or the start of the line, non-parallel to the axis of rotation, of the two dimensional outline;

   • for each intermediate rectangle (R1-R4):

      • finding a corresponding part (R1'-R4') of the texture image taking perspective correction into account; and
      • copying, with scaling, the corresponding part (R1'-R4') of the texture image in order to fit it into the intermediate rectangle (R1-R4).

2. The method according to claim 1 **characterized in that** the lines, non-parallel to the axis of rotation, of the two dimensional outline are calculated using Bresenham algorithm.

3. The method according to claim 1 **characterized in that** a blitter executes the copying and scaling tasks.

4. The method according to claim 1 **characterized in that** the angle of rotation is between 0 degrees and 45 degrees or 0 degrees and -45 degrees.

5. The method according to claim 1 **characterized in that** at least one of the intermediate rectangles (R1-R4) has four equal sides.

6. A computer program comprising program code means for performing all the steps of the method as claimed in any of claims 1 to 5 when said program is run on a computer.

7. A computer readable medium storing computer-executable instructions performing all the steps of the computer-implemented method according to any of claims 1 to 5 when executed on a computer.

**Patentansprüche**

1.  Computer-implementiertes Verfahren zum Drehen einer Geometrieform, welche ein zugeordnetes Texturbild aufweist, wobei das Verfahren die Schritte umfasst:

    - Erhalten einer Quellgeometrieform (101, 201, 302) mit einer zugeordneten Textur (303), wobei die Tiefenkoordinate für alle Pixel der Quellgeometrieform (101, 201, 302) konstant ist;
    - Erhalten einer Aufforderung, die Quellgeometrieform (101, 201, 302) um eine Drehachse zu drehen, die entweder die X-Achse oder die Y-Achse einer zweidimensionalen Projektionsebene ist;
    - Definieren eines zweidimensionalen Umrisses einer gedrehten Quellgeometrieform durch Durchführen ihrer perspektivischen Projektion auf die zweidimensionale Ebene;

    **dadurch gekennzeichnet, dass** das Verfahren ferner die Schritte umfasst:

    - Bestimmen von Teilungspunkten für den zweidimensionalen Umriss an Stellen, an denen Pixel von einer der nicht zur Drehachse parallelen Linien des zweidimensionalen Umrisses die Koordinaten ändern,
    - Teilen des zweidimensionalen Umrisses ausschließlich an den Teilungspunkten in Zwischenrechtecke (R1-R4), derart dass:

        - im Falle einer Drehung um die Y-Achse sich der Y-Koordinatenwert des Pixels um 1 oder -1 ändert, gezählt von dem Y-Koordinatenwert des vorherigen Teilungspunktes oder des Beginns der nicht zur Drehachse parallelen Linie des zweidimensionalen Umrisses; und
        - im Falle einer Drehung um die X-Achse sich der X-Koordinatenwert des Pixels um 1 oder -1 ändert, gezählt von dem X-Koordinatenwert des vorherigen Teilungspunktes oder des Beginns der nicht zur Drehachse parallelen Linie des zweidimensionalen Umrisses;

        - für jedes Zwischenrechteck (R1-R4):

            - Finden eines entsprechenden Teils (R1'-R4') des Texturbildes unter Berücksichtigung einer perspektivischen Korrektur; und
            - Kopieren, mit Skalieren, des entsprechenden Teils (R1'-R4') des Texturbildes, um es in das Zwischenrechteck (R1-R4) einzupassen.

2.  Verfahren nach Anspruch 1, **dadurch gekennzeichnet, dass** die nicht zu der Drehachse parallelen Linien des zweidimensionalen Umrisses unter Verwendung des Bresenham-Algorithmus berechnet werden.

3.  Verfahren nach Anspruch 1, **dadurch gekennzeichnet, dass** ein Blitter die Kopier- und Skalier-Aufgabe ausführt.

4.  Verfahren nach Anspruch 1, **dadurch gekennzeichnet, dass** der Drehwinkel zwischen 0 Grad und 45 Grad oder zwischen 0 Grad und -45 Grad liegt.

5.  Verfahren nach Anspruch 1, **dadurch gekennzeichnet, dass** wenigstens eines der Zwischenrechtecke (R1-R4) vier gleiche Seiten aufweist.

6.  Computerprogramm, welches Programmcode-Mittel umfasst, zum Durchführen aller Verfahrensschritte wie in einem der Ansprüche 1 bis 5 beansprucht, wenn das Programm auf einem Computer abläuft.

7.  Computer-lesbares Medium, welches Computer-ausführbare Befehle speichert, die alle Schritte des Computerimplementierten Verfahrens nach einem der Ansprüche 1 bis 5 ausführen, wenn sie auf einem Computer ausgeführt werden.

**Revendications**

1.  Procédé mis en oeuvre par ordinateur de rotation d'une forme géométrique ayant une image de texture assignée, le procédé comprenant les étapes consistant à

    - obtenir une forme géométrique source (101, 201, 302) avec une texture assignée (303), où la coordonnée de profondeur est constante pour tous les pixels de la forme géométrique source (101, 201, 302) ;

- recevoir une demande de rotation de la forme géométrique source (101, 201, 302) autour d'un axe de rotation qui est soit l'axe X soit l'axe Y d'un plan de projection bidimensionnel ;
- définir un contour bidimensionnel d'une forme géométrique source ayant fait l'objet d'une rotation en effectuant sa projection en perspective sur le plan bidimensionnel ;

**caractérisé en ce que** procédé comprend en outre les étapes consistant à

- déterminer des points de séparation pour le contour bidimensionnel à des endroits où un pixel de l'une ou l'autre des lignes, non parallèles à l'axe de rotation, du contour bidimensionnel change de coordonnées,
- séparer le contour bidimensionnel exclusivement au niveau des points de séparation en rectangles intermédiaires (R1-R4), de sorte que :

   - dans le cas d'une rotation autour de l'axe Y, la valeur de coordonnée Y du pixel change de 1 ou -1 compté à partir de la valeur de coordonnée Y du point de séparation précédent ou du début de la ligne, non parallèle à l'axe de rotation, du contour bidimensionnel ; et
   - dans le cas d'une rotation autour de l'axe X, la valeur de coordonnée X du pixel change de 1 ou -1 compté à partir de la valeur de coordonnée X du point de séparation précédent ou du début de la ligne, non parallèle à l'axe de rotation, du contour bidimensionnel ;

- pour chaque rectangle intermédiaire (R1-R4) :

   - trouver une partie correspondante (R1'-R4') de l'image de texture en prenant en compte la correction de perspective ; et
   - copier, avec une mise à l'échelle, la partie correspondante (R1'-R4') de l'image de texture afin de la faire entrer dans le rectangle intermédiaire (R1-R4).

2. Procédé selon la revendication 1, **caractérisé en ce que** les lignes, non parallèles à l'axe de rotation, du contour bidimensionnel sont calculées en utilisant l'algorithme de Bresenham.

3. Procédé selon la revendication 1, **caractérisé en ce qu'**un blitter (accélérateur graphique) exécute les tâches de copie et de mise à l'échelle.

4. Procédé selon la revendication 1, **caractérisé en ce que** l'angle de rotation est compris entre 0 degré et 45 degrés ou 0 degré et -45 degrés.

5. Procédé selon la revendication 1, **caractérisé en ce qu'**au moins un des rectangles intermédiaires (R1-R4) a quatre côtés égaux.

6. Programme informatique comprenant des moyens de code de programme pour effectuer toutes les étapes du procédé tel que revendiqué dans l'une quelconque des revendications 1 à 5 lorsque ledit programme est exécuté sur un ordinateur.

7. Support lisible par ordinateur stockant des instructions exécutables par ordinateur effectuant toutes les étapes du procédé mis en oeuvre par ordinateur selon l'une quelconque des revendications 1 à 5 lorsqu'il est exécuté sur un ordinateur.

**Fig. 1A**

**Fig. 1B**

**Fig. 1C**

201

# Fig. 2A

X

Y

202

203

A          B

204          205

206

C          D

X          Z          Y

# Fig. 2B

Y

207

# Fig. 2C

Fig. 3A

Fig. 3B

Fig. 3C

Obtain a source
geometric shape
and a texture
mapped thereto

Request to
rotate

Perspective projection onto
a two dimensional plane

401

402

403

404

Monitor lines non-parallel to
the axis of rotation, define
intermediate rectangles

405

Map intermediate rectangles
to the texture

406

Execute copying
and scaling

# Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 06036039 B